# EUROPÄISCHE PATENTSCHRIFT

(11) **EP 1 358 961 B1**
(45) Veröffentlichungstag und Bekanntmachung des Hinweises auf die Patenterteilung: **09.07.2008**
(21) Anmeldenummer: 03009979.0
(22) Anmeldetag: 02.05.2003
(51) Int. Cl.: B23K 9/20

(54) **Vorrichtung zum Schweissen von Metallelementen, insbesondere Bolzen, auf Bauteile**
Stud welding device
Dispositif de soudage de goujons

(30) Priorität: 03.05.2002 DE 10220560
(43) Veröffentlichungstag der Anmeldung: 05.11.2003
(73) Patentinhaber: Newfrey LLC, Newark, Delaware 19711 (US)
(72) Erfinder: Obermann, Wolfgang, 35305 Grünberg (DE)
(74) Vertreter: Haar, Lucas Heinz Jörn

(56) Entgegenhaltungen:
- WO-A-01/76800

## Beschreibung

Die Erfindung betrifft eine Vorrichtung zum Schweißen von Metallelementen, insbesondere Bolzen, auf Bauteile, mit einem Schweißkopf, der eine Spannzange zur Aufnahme eines Elementes aufweist, mit einer Zuführeinheit zur Zuführung von Elementen in die Spannzange, und mit einer Leistungsversorgungseinrichtung zur Zuführung von elektrischer Energie für einen Schweißvorgang.

Eine derartige Schweißvorrichtung ist bspw. aus der EP 0 784 526 B1 oder der WO 01/76800 A1 bekannt. Bei dem verwendeten Schweißverfahren handelt es sich hierbei um das sogenannte Kurzzeit-Lichtbogenschweißen, das auch unter dem Begriff "Bolzenschweißen" allgemein bekannt ist. Hierbei wird ein in einer Spannzange aufgenommenes Element im Rahmen eines Schweißvorgangs zunächst gegenüber dem Bauteil angehoben, ein Schweißlichtbogen zwischen Element und Bauteil gebildet und das Element anschließend wieder abgesenkt.

Die Technologie des Bolzenschweißens wird insbesondere, jedoch nicht ausschließlich, in der Fahrzeugtechnik eingesetzt. Mit dieser Technologie können Bolzen mit oder ohne Gewinde, Muttern, Ösen und andere Elemente auf Karosseriebleche aufgeschweißt werden. Die Elemente dienen dann in der Regel als Halteanker zum Befestigen von bspw. Innenraumausstattungen an der Fahrzeugkarosserie. Bei dem obengenannten Bolzenschweißen wird zunächst ein Element in eine Spannzange eines Schweißkopfes eingesetzt. Dies kann durch eine automatische Zuführeinrichtung, bspw. mittels Druckluft, erfolgen. Nach geeigneter Positionierung des Elementes in bezug auf das Bauteil, in der Regel mittels eines Roboterarms, wird der Schweißvorgang gestartet.

Es versteht sich, daß mit derartigen Schweißvorrichtungen eine Vielzahl von Schweißvorgängen nacheinander in der Regel vollautomatisiert durchgeführt werden muß. Hierbei können die zu verschweißenden Elemente bspw. mittels Druckluft unmittelbar in die Spannzange eingeschossen werden. Eine solche automatische Zuführmöglichkeit läßt sich im allgemeinen mit guter Zuverlässigkeit realisieren. Dabei versteht es sich, daß ein Schweißvorgang nur dann begonnen werden sollte, wenn sich tatsächlich ein zu verschweißendes Element in der Spannzange befindet. Gleichwohl können im Dauerbetrieb auch Störungen bei der automatischen Zufuhr von Elementen in die Spannzange auftreten. In einem solchen Fall sollte die Störung in der Zufuhr von zu verschweißenden Elementen möglichst frühzeitig erkannt werden und schon aus Sicherheitsgründen gar nicht versucht werden, einen Schweißvorgang einzuleiten.

Der Erfindung liegt somit die Aufgabe zugrunde, eine verbesserte Vorrichtung zum Schweißen von Metallelementen auf Bauteile zu schaffen, mit der eine Störung in der automatischen Zufuhr von Metallelementen in die Spannzange möglichst zuverlässig erkannt werden kann.

Diese Aufgabe wird bei einer Vorrichtung gemäß der eingangs genannten Art erfindungsgemäß dadurch gelöst, daß die Spannzange mindestens zwei elektrisch gegeneinander isolierte Segmente aufweist. Hierbei wird nämlich auf äußerst einfache und kostengünstige Weise unmittelbar an der Spannzange eine Überprüfung ermöglicht, ob sich ein zu verschweißendes Element in der Spannzange befindet oder nicht. Hierzu muß lediglich die elektrische Verbindung ausgewertet werden, die bei Aufnahme eines Metallelementes zwischen den gegeneinander isolierten Segmenten hergestellt ist. In zweckmäßiger Weiterbildung der Erfindung sind die elektrisch gegeneinander isolierten Segmente mit einer Sensoreinrichtung zur Erfassung einer elektrischen Kontaktgabe zwischen den elektrisch isolierten Segmenten gekoppelt. Hierzu können die Segmente gemäß einer weiteren Ausgestaltung der Erfindung mit einer Meßspannung verbunden sein und ein Stromfluß zwischen den Segmenten durch die Sensoreinrichtung ausgewertet werden. Die Sensoreinrichtung kann hierbei ein vorzugsweise digitales Signal erzeugen, das anzeigt, ob ein Element in der Spannzange aufgenommen ist.

Gemäß einer weiteren Ausgestaltung der Erfindung ist eine Steuereinrichtung zur Steuerung des Schweißvorgangs vorgesehen, mit der die Sensoreinrichtung gekoppelt ist. Durch diese Maßnahmen läßt sich auf besonders einfache, kostengünstige und zuverlässige Weise unmittelbar an der Spannzange feststellen, ob sich ein zu verschweißendes Element in der Spannzange befindet oder nicht. Durch Auswertung des Stromflusses und vorzugsweise Umwandlung in ein digitales Signal kann somit dann die Steuereinrichtung, bei der es sich in der Regel um eine Mikroprozessorsteuerung handelt, ein digitales Signal ausgegeben werden, das anzeigt, ob sich ein zu verschweißendes Element in der Spannzange befindet oder nicht. Die Steuereinrichtung kann so programmiert sein, daß ein Schweißvorgang nur dann gestartet werden kann, wenn detektiert wird, daß ein zu verschweißendes Element in der Spannzange aufgenommen wird. Ansonsten kann ggf ein entsprechendes Fehlersignal ausgegeben werden.

Gemäß einer ersten Variante der Erfindung weist die Spannzange elastisch ausgebildete Segmente auf. Hierbei kann die Spannzange zwei Segmente aufweisen, die, wie bei herkömmlichen, einteiligen Spannzangen üblich, durch Längsschlitze in zusammenhängende Untersegmente segmentiert sind.

Gemäß einer zweiten Variante der Erfindung weist die Spannzange an ihren Segmenten Einführabschnitte zur radialen Zuführung von Elementen auf. Eine solche Ausgestaltung ist insbesondere dann vorteilhaft, wenn die zu verschweißenden Elemente in die Spannzange nicht axial zugeführt werden sollen, sondern vielmehr seitlich. Hierbei werden für die Zufuhr eines zu verschweißenden Elementes die beiden Segmente auseinanderbewegt und nach Zufuhr des zu verschweißenden Elementes wieder zusammenbewegt, bis das Element zwischen den beiden Segmenten der Spannzange gehalten ist. Die Einführabschnitte können auch federnd ausgebildet sein, um eine radiale Zuführung zu erleichtern.

Die elektrische Auswertung der Meßspannung über die Sensoreinrichtung kann hierbei gleichzeitig zu einer Lagekontrolle für eine korrekte Schließbewegung der beiden Segmente der Spannzange ausgenutzt werden, was einen weiteren Vorteil darstellt. Die gegeneinander isolierten Segmente können gemäß einer weiteren Ausgestaltung der Erfindung durch ein ringförmiges Element zusammengehalten sein. Dies ist insbesondere bei der Ausführung als elastische Spannzange sinnvoll, wozu bspw. ein offener Kunststoffring verwendet werden kann.

Bevorzugte Ausführungsbeispiele der Erfindung sind in der nachfolgenden Beschreibung unter Bezugnahme auf die Zeichnung dargestellt. Es zeigen:
- Fig. 1: eine erfindungsgemäße Vorrichtung in stark vereinfachter, schematischer Darstellung;
- Fig. 2: das vordere Ende des Schweißkopfes gemäß Fig. 1 mit darin aufgenommener Spannzange in vergrößerter Seitenansicht;
- Fig. 3: eine Ansicht der Spannzange gemäß Fig. 2 von vorn;
- Fig. 4: eine Längsansicht einer gegenüber Fig. 2 abgewandelten Ausführung einer Spannzange; und
- Fig. 5: eine Vorderansicht der beiden Segmente der Spannzange gemäß Fig. 4.

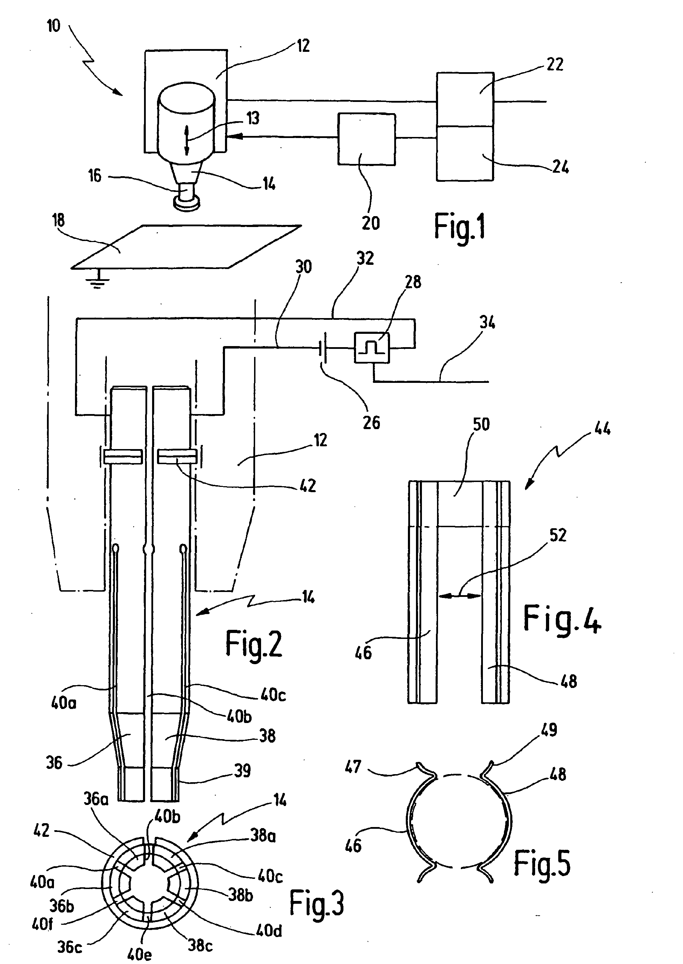

In Fig. 1 ist eine Vorrichtung zum Schweißen von Metallelementen 16 auf Bauteile 18 äußerst schematisch dargestellt und insgesamt mit der Ziffer 10 bezeichnet. Bei den Metallelementen könnte es sich im dargestellten Fall bspw. um Bolzen handeln, die auf ein Karosserieblech aufgeschweißt werden sollen. Als Schweißverfahren wird hierbei das sogenannten Kurzzeit-Lichtbogenschweißen verwendet, das grundsätzlich bekannt ist, z.B. aus der EP 0 784 526 B1.

Die Vorrichtung 10 weist einen Schweißkopf 12 auf, der bei einem Einsatz in der Fahrzeugindustrie in der Regel an einem Roboterarm aufgenommen ist. Im Schweißkopf 12 ist eine Spannzange 14 zur Aufnahme eines zu verschweißenden Elementes 16 vorgesehen. Zur Spannzange 14 werden zu verschweißende Elemente aus einer Elementzuführeinrichtung 20 bspw. mittels Druckluft zugeführt. Die zum Kurzzeit-Lichtbogenschweißen notwendige Leistung wird von einer Leistungsversorgungseinrichtung 22 bereitgestellt, die über eine Steuereinrichtung 24 gesteuert wird, die auch die übrigen Funktionen der Schweißvorrichtung steuert. Es versteht sich, daß die Steuereinrichtung 24 über geeignete Schnittstellen mit einer Steuerung des Roboterarms, in den die Schweißvorrichtung 10 aufgenommen ist, gekoppelt sein kann, und vorzugsweise an die übergeordnete Fertigungssteuerung z.B. über einen Industriebus angekoppelt ist. Während des Schweißprozesses wird das zu verschweißende Element 16 gegenüber dem geerdeten Bauteil 18 zunächst angehoben und ein Schweißlichtbogen zwischen Element 16 und Bauteil 18 gebildet. Im Zuge des Schweißvorgangs wird das Element 16 dann in grundsätzlich bekannter Weise wieder abgesenkt, wie durch den Doppelpfeil 13 angedeutet ist.

Erfindungsgemäß kann nun durch einen besonderen Aufbau der Spannzange 14 geprüft werden, ob ein zu verschweißendes Element 16 korrekt in die Spannzange 14 zugeführt wurde. Dies wird im folgenden anhand von Fig. 2 näher erläutert.

In Fig. 2 ist eine Spannzange 14 in der Längsansicht dargestellt, wobei der zugehörige Schweißkopf 12, aus dem die Spannzange 14 nach außen hervorsteht, nur schematisch mit einer strichpunktierten Linie angedeutet ist. Die Spannzange 14 ist durch zwei durchgehende Längsschlitze 40b, 40e (vgl. Fig. 3) entlang ihrer Mittelachse in zwei zueinander symmetrisch ausgebildete Segmente 36, 38 aufgeteilt, so daß zwei elektrisch gegeneinander isolierte Hälften gebildet sind. Die Spannzange 14 geht an ihrem äußeren Ende über einen konisch zulaufenden Abschnitt in einen zylindrischen Abschnitt über, der einen geringeren Durchmesser als der übrige zylindrische Bereich der Spannzange besitzt. Die Spannzange 14 weist ferner Längsschlitze 40a, c, d, f auf, die sich vom äußeren Ende 39 der Spannzange 14 aus in Axialrichtung über etwa zwei Drittel der Gesamtlänge der Spannzange erstrecken. Auf diese Weise sind die beiden Segmente 36, 38 der Spannzange 14 über die Längsschlitze 40a, c, d, f in zusammenhängende Zonen oder Untersegmente 36a, b, c bzw. 38a, b, c segmentiert. Auf diese Weise ist die Spannzange elastisch ausgebildet.

Die beiden Segmente 36, 38 der Spannzange 14 können durch einen umlaufenden Ring 42 zusammengehalten sein, der aus einem isolierenden Werkstoff, bspw. aus Kunststoff, besteht. Der Ring 42 ist nicht vollständig geschlossen, sondern an einer Stelle offen, um eine gewisse Radialbewegung der beiden Segmente 36, 38 zueinander zu erlauben. Die beiden Segmente 36, 38 sind über Leitungen 30, 32 mit einer Meßspannungsquelle 26 verbunden.

Ist nun ein elektrisch leitendes Metallelement 16 im äußeren Ende 39 der Spannzange 14 aufgenommen, so wird hierüber der Stromkreis geschlossen. Durch eine im Stromkreis befindliche Sensoreinrichtung 28 wird der Meßstrom detektiert und kann etwa über eine Leitung 34 als digitales Signal ("Bolzen-in-Halter-Signal") an die Steuereinrichtung 24 weitergegeben werden. Auf diese Weise können Fehler in der Zuführung von Elementen 16 aus der Elementzuführeinrichtung 20 in einfacher Weise erkannt werden. Die Steuereinrichtung 24 leitet nur dann einen Schweißvorgang ein, wenn ihr von der Sensoreinrichtung 28 gemeldet wird, daß ein zu verschweißendes Element korrekt zugeführt wurde.

In Fig. 4 ist eine alternative Ausführung einer erfindungsgemäßen Spannzange in der Längsansicht dargestellt und insgesamt mit der Ziffer 44 bezeichnet.

Wiederum besteht die Spannzange 44 aus zwei elektrisch voneinander isolierten Segmenten 46, 48. Im Unterschied zu der zuvor anhand der Figuren 2 und 3 erläuterten Ausführung handelt es sich hierbei jedoch nicht um eine elastische Spannzange 44, sondern um eine Spannzange mit zwei im wesentlichen starren Segmenten 46, 48, die im Schweißkopf 12 radial zueinander beweglich aufgenommen sind, wie durch die Ziffer 52 angedeutet ist. Am inneren Ende der Spannzange 44 ist ein zylindrisches Teil 50 aus Kunststoff aufgenommen, das als Anschlag beim Zusammenführen der beiden Segmente 46, 48 dient.

Zur Zuführung eines Elementes 16 in die Spannzange 44 werden also die beiden Segmente 46, 48 in nicht näher dargestellter Weise nach außen bewegt und dann vorzugsweise ein Element 16 von der Seite her zugeführt. Grundsätzlich wäre alternativ auch eine axiale Zuführung denkbar. Im vorliegenden Fall weisen die beiden Segmente 46, 48 jedoch Einführabschnitte 47, 49 auf, die sich von dem jeweiligen Ende eines kreissegmentförmigen Abschnittes aus nach außen erweitern, um bei der radialen Zuführung von Elementen 16 eine Zentrierung zu unterstützen. Befindet sich ein metallisches Element zwischen den beiden Segmenten 46, 48 der Spannzange 44, so fließt wiederum ein Meßstrom über die zugehörige Meßanordnung, die gemäß Fig. 2 aufgebaut sein kann.

Bei einer Spannzange 44 mit zwei zueinander radial beweglichen Segmenten 46, 48 besteht ein zusätzlicher Vorteil der erfindungsgemäßen Ausführung darin, daß dann, wenn über den Meßstrom erkannt wird, daß ein Element 16 korrekt in der Spannzange 44 aufgenommen ist, gleichzeitig die Spannzange 44 korrekt geschlossen ist, so daß ein etwaiger Fehler bei nicht korrektem Schließen der Spannzange 44 gleichfalls erkannt wird.

## Patentansprüche

1. Vorrichtung zum Schweißen von Metallelementen (16), insbesondere Bolzen, auf Bauteile (18), mit einem Schweißkopf (12), der eine Spannzange (14; 44) zur Aufnahme eines Elementes (16) aufweist, mit einer Zuführeinheit (20) zur Zuführung von Elementen (16) in die Spannzange (14; 44), und mit einer Leistungsversorgungseinrichtung (22) zur Zuführung von elektrischer Energie für einen Schweißvorgang, **dadurch gekennzeichnet, daß** die Spannzange (14; 44) mindestens zwei elektrisch gegeneinander isolierte Segmente (36, 38; 46, 48) aufweist.

2. Vorrichtung nach Anspruch 1, **dadurch gekennzeichnet, daß** die elektrisch gegeneinander isolierten Segmente (36, 38; 46, 48) mit einer Sensoreinrichtung (28) zur Erfassung einer elektrischen Kontaktgabe zwischen den elektrisch isolierten Segmenten (36, 38; 46, 48) gekoppelt sind.

3. Vorrichtung nach Anspruch 1, **dadurch gekennzeichnet, daß** die Segmente (36, 38; 46, 48) mit einer Meßspannung (26) verbunden sind, und daß die Sensoreinrichtung (28) zur Auswertung eines Stromflusses zwischen den Segmenten (36, 38; 46, 48) ausgebildet ist.

4. Vorrichtung nach Anspruch 3, **dadurch gekennzeichnet, daß** die Sensoreinrichtung (28) ein vorzugsweise digitales Signal erzeugt, das anzeigt, ob ein Element (16) in der Spannzange (14; 44) aufgenommen ist.

5. Vorrichtung nach einem der Ansprüche 2 bis 4, **gekennzeichnet durch** eine Steuereinrichtung (24) zur Steuerung des Schweißvorgangs, mit der die Sensoreinrichtung (28) gekoppelt ist.

6. Vorrichtung nach einem der vorhergehenden. Ansprüche, **dadurch gekennzeichnet, daß** die Spannzange (14) elastisch ausgebildete Segmente (36, 38) auf weist.

7. Vorrichtung nach Anspruch 6, **dadurch gekennzeichnet, daß** die Spannzange (14) zwei Segmente (36, 38) aufweist, die durch Längsschlitze (40a, c, d, f) in zusammenhängende Untersegmente (36a, b, c, 38a, b, c) segmentiert sind.

8. Vorrichtung nach einem der Ansprüche 1 bis 6, **dadurch gekennzeichnet, daß** die Spannzange (44) an den Segmenten (46, 48) Einführabschnitte (47, 49) zur radialen Zuführung von Elementen (16) aufweist.

9. Vorrichtung nach einem der vorhergehenden Ansprüche, **dadurch gekennzeichnet, daß** die Segmente (36, 38; 46, 48) durch ein ringförmiges Element (42, 48) zusammengehalten sind.

## Claims

1. Device for welding metal elements (16) in particular studs, on structural parts (18), having a welding head (12) that has a collet chuck (14; 44) for the accommodation of an element (16), having a feed unit (20) for the feed of elements (16) into the chuck (14; 44), and having a power supply means (22) for the supply of electric energy for a welding procedure, **characterized in that** the collet chuck (14; 44) has at least two segments (36, 38; 46; 48) electrically isolated from one another.

2. Device according to Claim 1, **characterized in that** the segments (36, 38; 46, 48) electrically isolated from one another are coupled with a sensor means (28) for the detection of an electrical contact being made between the electrically isolated segments (36, 38; 46, 48).

3. Device according to Claim 1, **characterized in that** the segments (36, 38; 46, 48) are connected with a test voltage (26), and **in that** the sensor means (28) is designed for the evaluation of a flow of current between the segments (36, 38; 46, 48).

4. Device according to Claim 3, **characterized in that** the sensor means (28) generates a signal, preferably digital, that indicates whether an element (16) is carried in the collet chuck (14; 44).

5. Device according to any of Claims 2 to 4, **characterized by** a control means (24), with which the sensor means (28) is coupled, for control of the welding procedure.

6. Device according to any of the preceding claims, **characterized in that** the collet chuck (14) has segments (36, 38) designed flexible.

7. Device according to Claim 6, **characterized in that** the collet chuck (14) has two segments (36, 38), which are segmented into unbroken subsegments (36a, b, c, 38a, b, c) by longitudinal slits (40a, c, d, f).

8. Device according to any of Claims 1 to 6, **characterized in that** the collet chuck (44) has guide sections (47, 49) on the segments (46, 48) for the radial feed of elements (16).

9. Device according to any of the preceding claims, **characterized in that** the segments (36, 38; 46, 48) are held together by an annular element (42, 48).

## Revendications

1. Dispositif pour souder des éléments métalliques (16), en particulier des goujons, sur des éléments de construction (18), avec une tête de soudage (12) qui comporte une pince de serrage (14 ; 44) pour recevoir un élément (16), avec une unité d'amenée (20) pour amener des éléments (16) dans la pince de serrage (14 ; 44), et avec un dispositif d'alimentation en puissance (22) pour l'amenée d'énergie électrique pour une opération de soudage, **caractérisé en ce que** la pince de serrage (14 ; 44) comporte au moins deux segments (36, 38 ; 46, 48) isolés électriquement l'un de l'autre.

2. Dispositif selon la revendication 1, **caractérisé en ce que** les segments (36, 38 ; 46, 48) isolés électriquement l'un de l'autre sont couplés à un dispositif de détection (28) pour détecter un contact électrique entre les segments (36, 38 ; 46, 48) isolés électriquement.

3. Dispositif selon la revendication 1, **caractérisé en ce que** les segments (36, 38 ; 46, 48) sont reliés à une tension de mesure (26), et **en ce que** le dispositif de détection (28) est conçu pour l'interprétation d'un flux de courant entre les segments (36, 38 ; 46, 48).

4. Dispositif selon la revendication 3, **caractérisé en ce que** le dispositif de détection (28) produit un signal de préférence numérique qui indique si un élément (16) est reçu dans la pince de serrage (14 ; 44).

5. Dispositif selon l'une quelconque des revendications 2 à 4, **caractérisé par** un dispositif de commande (24) pour la commande de l'opération de soudage, dispositif auquel est couplé le dispositif de détection (28).

6. Dispositif selon l'une quelconque des revendications précédentes, **caractérisé en ce que** la pince de serrage (14) comporte des éléments (36, 38) réalisés élastiques.

7. Dispositif selon la revendication 6, **caractérisé en ce que** la pince de serrage (14) comporte deux segments (36, 38) qui sont segmentés par des fentes longitudinales (40a, c, d, f) en sous-segments (36a, b, c ; 38a, b, c) attachés les uns aux autres.

8. Dispositif selon l'une quelconque des revendications 1 à 6, **caractérisé en ce que** la pince de serrage (44) présente sur les segments (46, 48) des sections d'introduction (47, 49) pour l'amenée radiale d'éléments (16).

9. Dispositif selon l'une quelconque des revendications précédentes, **caractérisé en ce que** les segments (36, 38 ; 46, 48) sont maintenus ensemble par un élément (42, 48) de forme annulaire.
